# FASCICULE DE BREVET EUROPEEN

(11) **EP 1 064 471 B1**
(45) Date de publication et mention de la délivrance du brevet: **07.08.2002**
(21) Numéro de dépôt: 99909017.8
(22) Date de dépôt: 16.03.1999
(51) Int. Cl.: F16D 65/095, F16D 55/2265

(54) **FREIN A DISQUE AMORTI PAR CISAILLEMENT**
DURCH QUERKRAFT GEDÄMPFTE SCHEIBENBREMSE
DISK BRAKE DAMPED BY SHEARING

(30) Priorité: 23.03.1998 FR 9803519
(43) Date de publication de la demande: 03.01.2001
(73) Titulaire: Bosch Systemes de Freinage, 93700 Drancy (FR)
(72) Inventeur: MERY, Jean-Claude, F-93320 Pavillons-sous-Bois (FR); BOISSEAU, Jean-Pierre, F-75014 Paris (FR)
(74) Mandataire: Hurwic, Aleksander Wiktor
(86) Numéro de dépôt international: FR9900598
(87) Numéro de publication internationale: WO9949231

(56) Documents cités:
- WO-A-94/24452
- DE-A- 2 934 219
- DE-A- 3 729 154
- DE-A- 4 028 951
- US-A- 3 416 634
- US-A- 3 964 581
- US-A- 5 323 882

## Description

La présente invention concerne un frein à disque pour véhicule à moteur.

Plus précisément, la présente invention concerne un frein à disque du type de ceux qui comprennent : un disque présentant une face interne et une face externe, ce disque tournant autour d'un axe transversal suivant un sens de rotation direct pour une marche avant du véhicule; une chape comprenant une branche amont et une branche aval chevauchant le disque et solidaires d'une base commune fixée au véhicule en regard de la face interne du disque, la branche aval succédant à la branche amont dans le sens de rotation direct du disque, et chaque branche présentant un logement interne et un logement externe, situés de part et d'autre du disque; un étrier chevauchant le disque et monté coulissant par rapport à la chape suivant une direction transversale parallèle à l'axe transversal, cet étrier comprenant une mâchoire tournée vers la face externe du disque, et un cylindre tourné vers la face interne du disque et fermé par un piston; des moyens de guidage, prévus sur la chape et sur l'étrier et comprenant un alésage et une colonnette coulissant dans l'alésage; et une paire de patins de friction formée d'un patin interne et d'un patin externe respectivement disposés, suivant la direction transversale, entre le piston et la face interne du disque, et entre la face externe du disque et la mâchoire de l'étrier, le patin interne présentant une extrémité amont et une extrémité aval montées coulissantes dans les logements internes respectifs des branches amont et aval, et le patin externe présentant une extrémité amont et une extrémité aval montées coulissantes dans les logements externes respectifs des branches amont et aval, les patins interne et externe portant, entre leurs extrémités respectives, des garnitures de friction respectives, tournées vers les faces interne et externe du disque, et par l'intermédiaire desquelles chaque patin reçoit une sollicitation du disque dans le sens de rotation direct en cas de freinage en marche avant du véhicule.

Des freins à disque de ce type sont bien connus dans l'art antérieur, comme le montrent par exemple les documents de brevets PCT/FR96/00615, PCT/FR94/00174, et EP-0 694 133.

L'un des nombreux problèmes qui se posent dans la conception des freins à disque réside dans la difficulté d'absorber les forces d'entraînement transmises aux patins par le disque, sans que les déformations de la chape qui en résultent nécessairement engendrent une résistance s'opposant au coulissement satisfaisant de l'étrier par rapport à la chape, une telle résistance étant elle-même génératrice d'usure anormale et dissymétrique des patins, de risque de blocage du frein, d'augmentation de l'absorption de liquide de frein, de bruit, etc.

L'invention se situe dans ce contexte et a pour but de proposer un frein à disque capable d'absorber les forces d'entraînement transmises aux patins par le disque en les transformant en forces de cisaillement.

A cette fin, le frein de l'invention, par ailleurs conforme au préambule ci-dessus, est essentiellement caractérisé en ce que la colonnette est unique et située dans un plan médian de l'étrier, en ce que la branche aval de la chape et la mâchoire de l'étrier présentent des première et seconde surfaces de contact respectives susceptibles de venir en appui l'une sur l'autre suivant un premier plan oblique, en ce que la branche aval de la chape et un premier au moins des patins interne et externe présentent des troisième et quatrième surfaces de contact respectives susceptibles de venir en appui l'une sur l'autre suivant un second plan oblique, et en ce que les premier et second plans obliques font entre eux un angle non nul.

Le frein à disque de l'invention peut aussi avantageusement comprendre un ressort prenant appui sur le patin externe et sur la mâchoire de l'étrier et exerçant un couple élastique tendant à faire tourner l'étrier dans le sens de rotation direct par rapport au patin externe.

Dans un mode de réalisation possible de l'invention, l'extrémité amont de l'un au moins des patins interne et externe est accrochée à la branche amont de la chape.

De préférence, la branche aval de la chape présente une paire de premières surfaces de contact formant un dièdre de contact mutuel entre cette branche aval et la mâchoire, et une paire de troisièmes surfaces de contact formant un dièdre de contact mutuel entre cette branche aval et le premier patin.

De cette façon, la mâchoire de l'étrier peut présenter, en regard de la branche aval de la chape, une paire de secondes surfaces de contact dont chacune est susceptible de venir en appui sur le dièdre de contact mutuel entre la branche aval de la chape et la mâchoire.

De même, l'extrémité aval du premier patin peut présenter une paire de quatrièmes surfaces de contact dont chacune est susceptible de venir en appui sur le dièdre de contact mutuel entre la branche aval de la chape et ce premier patin.

Enfin, il peut également être avantageux de prévoir que l'angle, formé entre les premier et second plans obliques, soit au moins égal à 45 degrés.

D'autres caractéristiques et avantages de l'invention ressortiront clairement de la description qui en est faite ci-après, à titre indicatif et nullement limitatif, en référence aux dessins annexés, dans lesquels:
- la figure 1 est une vue de dessus et en coupe partielle d'un frein à disque connu, du type de ceux auxquels s'applique la présente invention;
- la figure 2 est une vue de dessus et en coupe partielle d'un frein à disque conforme à la présente invention;
- la figure 3 est une vue de face d'un frein à disque conforme à l'invention, observé depuis l'extérieur du véhicule sur lequel il est monté;
- la figure 4 est une vue semblable à la figure 3, représentant le frein dans un autre état;
- la figure 5 est une vue de dessus d'une chape d'un frein à disque conforme à l'invention; et
- la figure 6 est une vue de face d'un frein à disque conforme à l'invention, observé suivant l'incidence repérée par les flèches 6-6 de la figure 2.

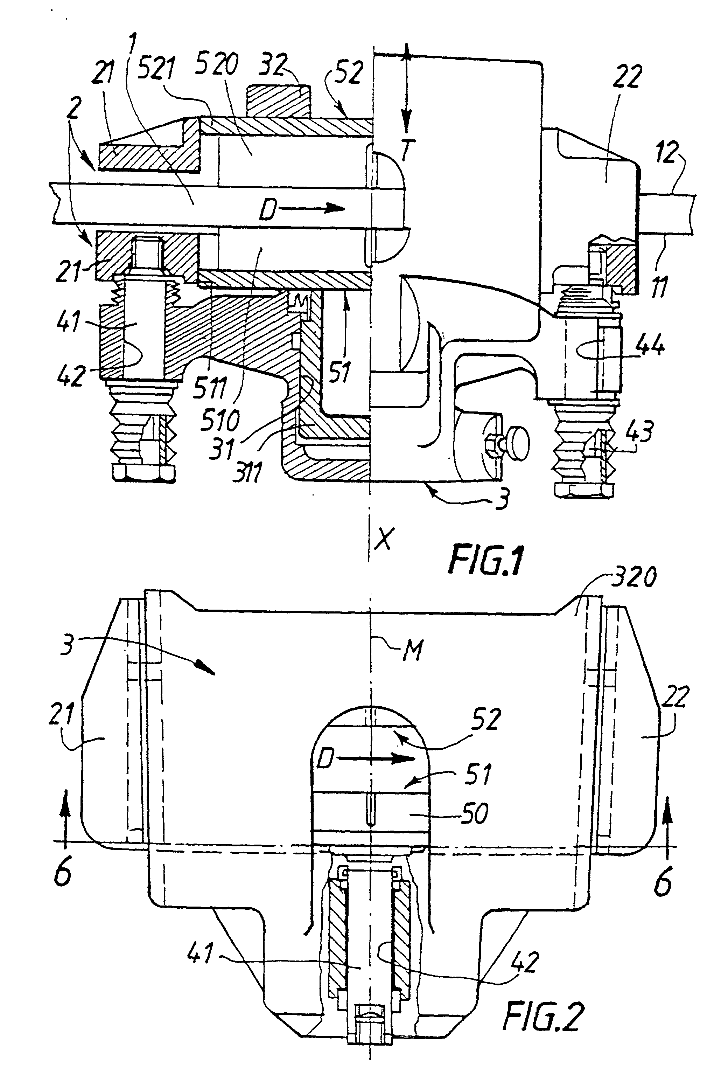

Comme le montre la figure 1, l'invention s'applique à un frein à disque pour véhicule à moteur, du type de ceux qui comprennent de façon connue un disque 1, une chape 2, un étrier 3, des moyens de guidage 41, 42, 43, 44 prévus sur la chape 2 et sur l'étrier 3, et une paire de patins de friction formée d'un patin interne 51 et d'un patin externe 52.

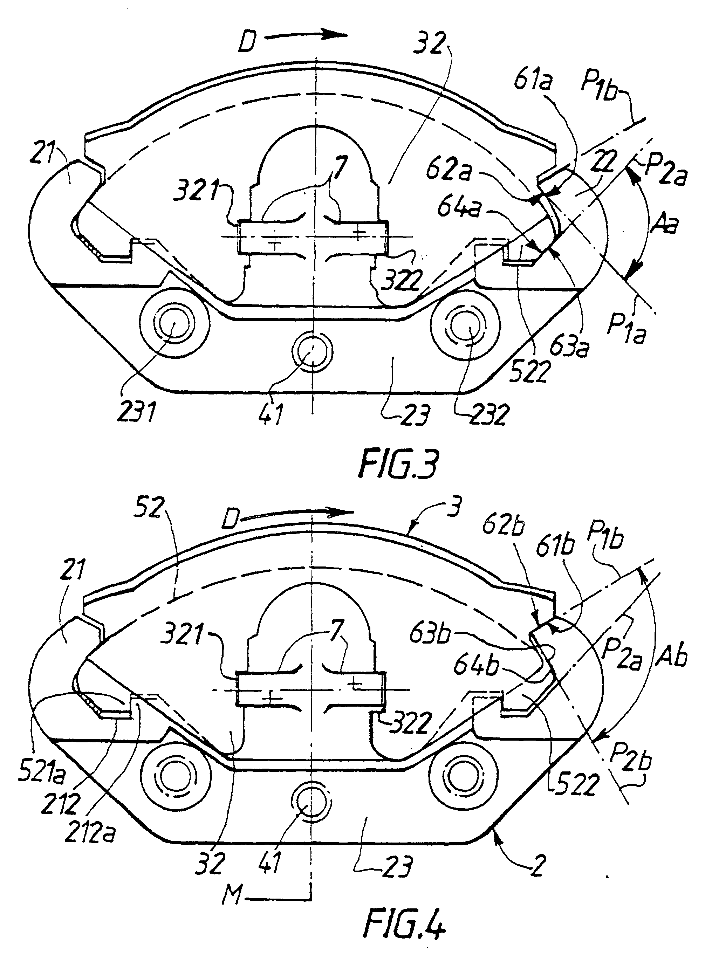

Pour des raisons de clarté, le disque est supposé tourner de la gauche vers la droite sur toutes les figures, de sorte que si les figures 1, 2, 5, et 6 sont supposées représenter un frein monté sur le côté gauche d'un véhicule, les figures 3 et 4 doivent être considérées comme représentant un frein monté sur le côté droit de ce véhicule.

Le disque 1 présente une face interne 11 et une face externe 12 et est entraîné, avec une roue du véhicule, en rotation autour d'un axe transversal X suivant un sens de rotation direct D pour une marche avant du véhicule.

La chape 2 comprend une branche amont 21 et une branche aval 22 qui chevauchent toutes les deux le disque 1 et qui sont solidaires d'une base commune 23 de la chape, cette dernière étant fixée au véhicule en regard de la face interne 11 du disque, par exemple au moyen de vis insérées dans des orifices 231 et 232.

Par convention, la branche aval 22 est ici définie comme étant celle qui succède à l'autre, dite "branche amont 21", dans le sens de rotation direct D du disque.

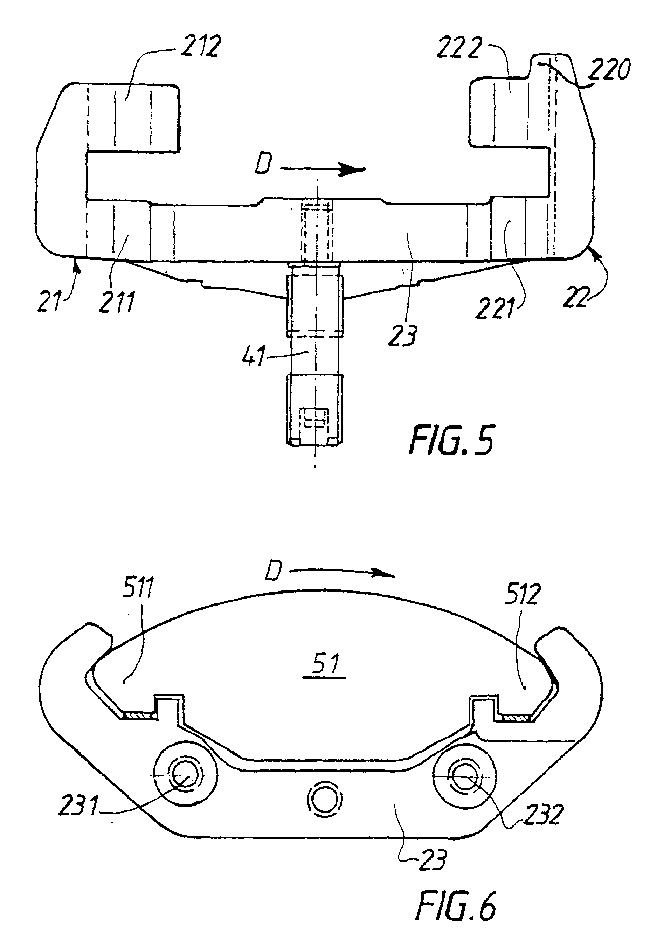

En outre, comme le montre le mieux la figure 5, chaque branche présente un logement interne 211, 221 et un logement externe 212, 222, les logements internes et externes étant situés de part et d'autre du disque 1.

L'étrier 3, qui chevauche le disque 1 également, est monté coulissant par rapport à la chape 2, suivant une direction transversale T parallèle à l'axe transversal X.

Cet étrier 3, qui joue le rôle de pince, comprend essentiellement une mâchoire 32 tournée vers la face externe 12 du disque, et un cylindre 31 situé du côté de la face interne 11 du disque et fermé par un piston 311.

Les moyens de guidage 41, 42, 43, et 44 sont constituées en paires, chaque paire comprenant un alésage et une colonnette montée coulissante dans cet alésage.

Dans l'art antérieur illustré à la figure 1, les moyens de guidage 41 et 43 prévus sur la chape sont constitués de deux colonnettes, les moyens de guidage 42 et 44 prévus sur l'étrier 3 étant alors constitués de deux alésages.

Le patin interne 51 est disposé, suivant la direction transversale T, entre le piston 311 et la face interne 11 du disque, et présente une extrémité amont 511 et une extrémité aval 512 montées coulissantes dans les logements internes respectifs 211, 221 des branches amont et aval 21, 22.

De façon similaire, le patin externe 52 est disposé entre la face externe 12 du disque et la mâchoire 32 de l'étrier, et présente une extrémité amont 521 et une extrémité aval 522 montées coulissantes dans les logements externes respectifs 212, 222 des branches amont et aval 21, 22.

Par ailleurs, les patins interne et externe 51, 52 portent, entre leurs extrémités respectives, des garnitures de friction 510, 520, la garniture 510 du patin interne étant tournée vers la face interne 11 du disque 1, et la garniture 520 du patin externe étant tournée vers la face externe 12 du disque.

Lorsque du liquide de frein sous pression est injecté dans le cylindre 31 et repousse vers le disque 1 le piston 311, ce dernier applique le patin 51 contre la face interne 11 du disque, ce dont il résulte que le cylindre 31 est contraint à s'éloigner du disque jusqu'à ce que la mâchoire 32 applique le patin externe 52 sur la face externe 12 du disque avec une force équivalente.

Si, lors de cette opération, le véhicule roule en marche avant, les patins 51 et 52 reçoivent donc de la part du disque, et par l'intermédiaire de leurs garnitures 510 et 520 qui frottent sur ce dernier, une force qui les sollicitent dans le sens de rotation direct D et qui doit être absorbée par la chape 2, l'invention ayant précisément pour but de proposer des moyens spécifiques pour faciliter cette absorption.

A cette fin, le frein de l'invention ne comprend qu'une seule paire de moyens de guidage, c'est-à-dire une unique colonnette 41 coulissant dans un unique alésage 42, la colonnette 41 et l'alésage 42 pouvant indifféremment être respectivement prévus sur la chape et sur l'étrier ou l'inverse, pourvu qu'ils soient disposés dans le plan médian de l'étrier 3, c'est-à-dire dans le plan qui, dans le cas où le frein ne comprend qu'un piston central unique comme illustré, est constitué par le plan de trace M passant par l'axe X de rotation du disque et par l'axe de symétrie de révolution du piston 311.

D'autre part, la branche aval 22 de la chape et la mâchoire 32 de l'étrier présentent des première et seconde surfaces de contact respectives telles que 61a, 62a sur la figure 3 et 61b, 62b sur la figure 4, qui, lors de l'actionnement du frein, sont susceptibles de venir en appui l'une sur l'autre suivant un premier plan oblique tel que P1a sur la figure 3 et P1b sur la figure 4.

D'autre part encore, la branche aval 22 de la chape et l'un au moins des patins, par exemple le patin externe 52, présentent des troisième et quatrième surfaces de contact respectives telles que 63a, 64a sur la figure 3 et 63b, 64b sur la figure 4, qui, lors de l'actionnement du frein, sont susceptibles de venir en appui l'une sur l'autre suivant un second plan oblique tel que P2a sur la figure 3 et P2b sur la figure 4.

Enfin, comme le montrent les figures 3 et 4, les premier et second plans obliques tels que P1a et P2a ou P1b et P2b font entre eux un angle non nul tel que Aa ou Ab, de préférence au moins égal à 45 degrés.

Un ressort 7, par exemple fixé sur le patin externe 52 et en appui dans des encoches 321 et 322 de la mâchoire 32 de l'étrier, est de préférence prévu pour exercer un couple élastique tendant à faire tourner l'étrier 3 dans le sens de rotation direct D par rapport au patin externe 52.

L'examen des figures 3 et 4, qui concernent le même frein observé dans des phases de freinage différentes, permet de mieux comprendre l'invention.

Comme le montre la figure 3, qui correspond à un actionnement du frein sous faible couple de freinage, l'étrie est contraint, s'il est entraîné dans le sens de rotation direct indiqué par la flèche D, à suivre un mouvement de rotation dans ce sens direct D par appui de la surface de contact 62a sur la surface de contact 61a, tandis que le patin externe 52 est contraint, s'il est entraîné dans le sens direct D, à suivre un mouvement de rotation dans un sens inverse de ce sens direct D par appui de la surface de contact 64a sur la surface de contact 63a.

Cependant, comme l'étrier 3 enserre le patin externe 52, il a effectivement une tendance marquée à suivre les mouvements de ce patin.

Dans ces conditions, l'entraînement naturel de l'étrier 3 par le patin 52 et les effets contrariés des appuis de l'étrier 3 et du patin externe 52 sur la chape 2 engendrent un effort de cisaillement entre l'étrier 3 et le patin 52, dont résulte une absorption plus aisée du couple de freinage.

De même, comme le montre la figure 4 qui correspond à un actionnement du frein sous couple de freinage élevé, l'étrier est contraint, s'il est entraîné dans le sens de rotation direct indiqué par la flèche D, à suivre un mouvement de rotation dans un sens inverse du sens direct D par appui de la surface de contact 62b sur la surface de contact 61b, tandis que le patin externe 52 est contraint, s'il est entraîné dans le sens direct D, à suivre un mouvement de rotation dans ce même sens direct D par appui de la surface de contact 64b sur la surface de contact 63b.

Dans ce dernier cas, l'entraînement naturel de l'étrier 3 par le patin 52 et les effets contrariés des appuis de l'étrier 3 et du patin externe 52 sur la chape 2 engendrent donc également un effort de cisaillement entre l'étrier 3 et le patin 52, qui permet une meilleure absorption du couple de freinage.

Comme il est avantageux de cumuler les effets obtenus par l'invention dans le cas des couples de freinage relativement faibles et dans le cas des couples de freinage relativement élevés, il peut être utile de prévoir, comme le montrent les figures 3 et 4, que la branche aval 22 de la chape présente une paire 61a, 61b de premières surfaces de contact formant un dièdre P1a, P1b de contact mutuel entre la branche aval et la mâchoire 32, et une paire 63a, 63b de troisièmes surfaces de contact formant un dièdre P2a, P2b de contact mutuel entre la branche aval et le patin externe 52.

Dans ces conditions, la mâchoire 32 de l'étrier présente de préférence, en regard de la branche aval 22 de la chape, une paire de secondes surfaces de contact 62a, 62b dont chacune est susceptible de venir en appui sur le dièdre P1a, P1b de contact mutuel entre la branche aval 22 de la chape et la mâchoire 32.

De même, il est avantageux de faire en sorte que l'extrémité aval 522 du patin externe 52 présente, en regard de la branche aval 22 de la chape, une paire de quatrièmes surfaces de contact 64a, 64b, dont chacune est susceptible de venir en appui sur le dièdre P2a, P2b de contact mutuel entre la branche aval 22 de la chape et ce patin externe 52.

L'équilibre du frein peut en outre être amélioré en disposant les surfaces de contact 61a, 61b de la chape 2, et 62a, 62b de la mâchoire 3, exclusivement sur la partie externe 220 (figure 5) de la chape et sur la partie externe correspondante 320 (figure 2) de la mâchoire.

L'efficacité de l'agencement proposé peut également être renforcée en accrochant l'extrémité amont 511, 521 de l'un au moins des patins interne 51 et externe 52, et de préférence de ces deux patins, à la branche amont 21 de la chape, par exemple au moyen de reliefs respectifs complémentaires tels que 212a et 52 la (figure 4).

Enfin, les effets de l'invention peuvent aussi être augmentés en prévoyant que le patin interne 51 présente, lui aussi, une paire de surfaces de contact susceptibles de venir en appui sur la chape, ces surfaces étant alors symétriques par rapport au disque 1 des surfaces de contact 64a, 64b du patin externe 52.

## Revendications

1. Frein à disque pour véhicule à moteur, comprenant : un disque (1) présentant une face interne (11) et une face externe (12), ce disque tournant autour d'un axe transversal (X) suivant un sens de rotation direct (D) pour une marche avant du véhicule; une chape (2) comprenant une branche amont (21) et une branche aval (22) chevauchant le disque (1) et solidaires d'une base commune (23) fixée au véhicule en regard de la face interne (11) du disque, la branche aval (22) succédant à la branche amont (21) dans le sens de rotation direct (D) du disque, et chaque branche présentant un logement interne (211, 221) et un logement externe (212, 222) situés de part et d'autre du disque (1); un étrier (3) chevauchant le disque (1) et monté coulissant par rapport à la chape (2), suivant une direction transversale (T) parallèle à l'axe transversal (X), cet étrier (3) comprenant une mâchoire (32) tournée vers la face externe (12) du disque, et un cylindre (31) tourné vers la face interne (11) du disque et fermé par un piston (311); des moyens de guidage (41, 42) prévus sur la chape (2) et sur l'étrier (3) et comprenant un alésage et une colonnette coulissant dans l'alésage; et une paire de patins de friction formée d'un patin interne (51) et d'un patin externe (52) respectivement disposés, suivant la direction transversale (T), entre le piston (311) et la face interne (11) du disque, et entre la face externe (12) du disque et la mâchoire (32) de l'étrier, le patin interne (51) présentant une extrémité amont (511) et une extrémité aval (512) montées coulissantes dans les logements internes respectifs (211, 221) des branches amont et aval (21, 22), et le patin externe (52) présentant une extrémité amont (521) et une extrémité aval (522) montées coulissantes dans les logements externes respectifs (212, 222) des branches amont et aval (21, 22), les patins interne et externe (51, 52) portant, entre leurs extrémités respectives, des garnitures de friction respectives (510, 520) tournées vers les faces interne et externe (11, 12) du disque et par l'intermédiaire desquelles chaque patin reçoit une sollicitation du disque dans le sens de rotation direct (D) en cas de freinage en marche avant du véhicule, **caractérisé en ce que** la colonnette (41) est unique et située dans un plan médian (M) de l'étrier, **en ce que** la branche aval (22) de la chape et la mâchoire (32) de l'étrier présentent des première et seconde surfaces de contact respectives (61a, 62a; 61b, 62b) susceptibles de venir en appui l'une sur l'autre suivant un premier plan oblique (P1a, P1b), **en ce que** la branche aval (22) de la chape et un premier au moins des patins interne (51) et externe (52) présentent des troisième et quatrième surfaces de contact respectives (63a, 64a; 63b, 64b) susceptibles de venir en appui l'une sur l'autre suivant un second plan oblique (P2a, P2b), et **en ce que** les premier et second plans obliques (P1a, P2a; P1b, P2b) font entre eux un angle non nul (Aa, Ab).

2. Frein à disque suivant la revendication 1, **caractérisé en ce qu'**il comprend un ressort (7) prenant appui sur le patin externe (52) et sur la mâchoire (32) de l'étrier et exerçant un couple élastique tendant à faire tourner l'étrier (3) dans le sens de rotation direct (D) par rapport au patin externe (52).

3. Frein à disque suivant la revendication 1 ou 2, **caractérisé en ce que** l'extrémité amont (511, 521) de l'un au moins des patins interne (51) et externe (52) est accrochée à la branche amont (21) de la chape.

4. Frein à disque suivant l'une quelconque des revendications précédentes, **caractérisé en ce que** la branche aval (22) de la chape présente une paire (61a, 61b) de premières surfaces de contact formant un dièdre (P1a, P1b) de contact mutuel entre la branche aval et la mâchoire (32), et une paire (63a, 63b) de troisièmes surfaces de contact formant un dièdre (P2a, P2b) de contact mutuel entre la branche aval et le premier patin (51, 52).

5. Frein à disque suivant la revendication 4, **caractérisé en ce que** la mâchoire (32) de l'étrier présente, en regard de la branche aval (22) de la chape, une paire (62a, 62b) de secondes surfaces de contact dont chacune est susceptible de venir en appui sur le dièdre (P1a, P1b) de contact mutuel entre la branche aval (22) de la chape et la mâchoire (32).

6. Frein à disque suivant l'une quelconque des revendications 4 et 5, **caractérisé en ce que** l'extrémité aval (512, 522) du premier patin (51, 52) présente une paire (64a, 64b) de quatrièmes surfaces de contact dont chacune est susceptible de venir en appui sur le dièdre (P2a, P2b) de contact mutuel entre la branche aval (22) de la chape et ledit premier patin (51, 52).

7. Frein à disque suivant l'une quelconque des revendications précédentes, **caractérisé en ce que** l'angle (Aa, Ab) formé entre les premier et second plans obliques (P1a, P2a; P1b, P2b) est au moins égal à 45 degrés.

## Patentansprüche

1. Scheibenbremse für ein Kraftfahrzeug mit: einer Scheibe (1), die eine Innenseite (11) und eine Außenseite (12) aufweist, wobei sich diese Scheibe um eine Querachse (X) in einer Vorwärtsdrehrichtung (D) bei Vorwärtsfahrt des Fahrzeugs dreht; einem Halter (2), der einen vorderen Schenkel (21) und einen hinteren Schenkel (22) aufweist, welche die Scheibe (1) umgreifen und fest mit einer gemeinsamen Basis (23) verbunden sind, die am Fahrzeug gegenüber der Innenseite (11) der Scheibe befestigt ist, wobei der hintere Schenkel (22) auf den vorderen Schenkel (21) in der Vorwärtsdrehrichtung (D) der Scheibe folgt und wobei jeder Schenkel eine Innenaufnahme (211, 221) und eine Außenaufnahme (212, 222) aufweist, die auf der einen und der anderen Seite der Scheibe (1) angeordnet sind; einem Bremssattel (3), der die Scheibe (1) umgreift und bezüglich des Halters (2) entlang einer zur Querachse (X) parallelen Querrichtung (T) verschiebbar angebracht ist, wobei dieser Bremssattel (3) eine Backe (32) aufweist, die zur Außenseite (12) der Scheibe gerichtet ist, und einen Zylinder (31), der zur Innenseite (11) der Scheibe gerichtet ist und von einem Kolben (311) geschlossen ist; Führungsmitteln (41, 42), die an dem Halter (2) und am Bremssattel (3) vorgesehen sind und eine Bohrung und eine Stange, die in der Bohrung gleitet, umfassen; und einem Paar von Bremsklötzen, das von einem inneren Bremsklotz (51) bzw einem äußeren Bremsklotz (52) gebildet ist, die entlang der Querrichtung (T) zwischen dem Kolben (311) und der Innenseite (11) der Scheibe bzw. zwischen der Außenseite (12) der Scheibe und der Backe (32) des Bremssattels angeordnet sind, wobei der innere Bremsklotz (51) ein vorderes Ende (511) und ein hinteres Ende (512) aufweist, die verschiebbar in den entsprechenden Innenaufnahmen (211, 221) des vorderen und des hinteren Schenkels (21, 22) aufgenommen sind, und wobei der äußere Bremsklotz (52) ein vorderes Ende (521) und ein hinteres Ende (522) aufweist, die verschiebbar in den entsprechenden Außenaufnahmen (212, 222) des vorderen Schenkels und des hinteren Schenkels (21, 22) angebracht sind, wobei der innere und der äußere Bremsklotz (51, 52) zwischen ihren entsprechenden Enden entsprechende Reibbeläge (510, 520) aufweisen, die zur Innenseite und zur Außenseite (11, 12) der Scheibe gerichtet sind und mittels derer jeder Bremsklotz von der Scheibe eine Beaufschlagung in der Vorwärtsdrehrichtung (D) im Falle der Bremsung bei einer Vorwärtsfahrt des Fahrzeugs erfährt, **dadurch gekennzeichnet, daß** die Stange (41) die einzige ist und in einer Mittelebene (M) des Bremssattels liegt, daß der hintere Schenkel (22) des Halters und die Backe (32) des Bremssattels eine erste bzw eine zweite Kontaktfläche (61a, 62a, 61b, 62b) aufweisen, die in einer ersten schrägen Ebene (P1a, P1b) aneinander anliegen können, daß der hintere Schenkel (22) des Halters und wenigstens ein erster des inneren Bremsklotzes (51) und des äußeren Bremsklotzes (52) eine dritte bzw eine vierte Kontaktfläche (63a, 64a, 63b, 64b) aufweisen, die in einer zweiten schrägen Ebene (P2a, P2b) aneinander anliegen können, und daß die erste und die zweite schräge Ebene (P1a, P2a; P1b, P2b) einen von Null verschiedenen Winkel (Aa, Ab) miteinander einschließen.

2. Scheibenbremse nach Anspruch 1, **dadurch gekennzeichnet, daß** sie eine Feder (7) aufweist, die am äußeren Bremsklotz (52) und an der Backe (32) des Bremssattels anliegt und ein elastisches Drehmoment ausübt, das letztlich veranlaßt, daß sich der Bremssattel (3) in der Vorwärtsdrehrichtung (D) bezüglich des äußeren Bremsklotzes (52) dreht.

3. Scheibenbremse nach Anspruch 1 oder 2, **dadurch gekennzeichnet, daß** das vordere Ende (511, 521) von wenigstens einem des inneren Bremsklotzes (51) und des äußeren Bremsklotzes (52) in den vorderen Schenkel (21) des Halters eingehängt ist.

4. Scheibenbremse nach einem der vorangehenden Ansprüche, **dadurch gekennzeichnet, daß** der hintere Schenkel (22) des Halters ein Paar (61a, 61b) von ersten Kontaktflächen aufweist, die einen Flächenwinkel (P1a, P1b) des gegenseitigen Kontakts zwischen dem hinteren Schenkel und der Backe (32) bilden, und ein Paar (63a, 63b) von dritten Kontaktflächen, die einen Flächenwinkel (P2a, P2b) des gegenseitigen Kontakts zwischen dem hinteren Schenkel und dem ersten Bremsklotz (51, 52) bilden.

5. Scheibenbremse nach Anspruch 4, **dadurch gekennzeichnet, daß** die Backe (32) des Bremssattels gegenüber dem hinteren Schenkel (22) des Halters ein Paar (62a, 62b) von zweiten Kontaktflächen aufweist, von denen jede an dem Flächenwinkel (P1a, P1b) des gegenseitigen Kontakts zwischen dem hinteren Schenkel (22) des Halters und der Backe (32) anliegen kann.

6. Scheibenbremse nach einem der Ansprüche 4 und 5, **dadurch gekennzeichnet, daß** das hintere Ende (512, 522) des ersten Bremsklotzes (51, 52) ein Paar (64a, 64b) von vierten Kontaktflächen aufweist, von denen jede an dem Flächenwinkel (P2a, P2b) des gegenseitigen Kontakts zwischen dem hinteren Schenkel (22) des Halters und dem ersten Bremsklotz (51, 52) anliegen kann.

7. Scheibenbremse nach einem der vorangehenden Ansprüche, **dadurch gekennzeichnet, daß** der Winkel (Aa, Ab), der zwischen der ersten und der zweiten schrägen Ebene (P1a, P2a; P1b, P2b) gebildet ist, mindestens gleich 45 Grad beträgt.

## Claims

1. Disc brake for a motor vehicle, comprising: a disc (1) which has an inboard face (11) and an outboard face (12), this disc rotating about a transverse axis (X) in a direct sense of rotation (D) when the vehicle is travelling forward; a carrier (2) comprising an upstream branch (21) and a downstream branch (22) straddling the disc (1) and secured to a common base (23) which is fixed to the vehicle facing the inboard face (11) of the disc, the downstream branch (22) following on from the upstream branch (21) in the direct sense of rotation (D) of the disc, and each branch having an inboard housing (211, 221) and an outboard housing (212, 222) which are situated one on each side of the disc (1); a caliper (3) straddling the disc (1) and mounted so that it can slide relative to the carrier (2) in a transverse direction (T) parallel to the transverse axis (X), this caliper (3) comprising a jaw (32) facing towards the outboard face (12) of the disc, and a cylinder (31) facing towards the inboard face (11) of the disc and closed by a piston (311); guide means (41, 42) provided on the carrier (2) and on the caliper (3) and comprising a bore and a pin sliding in the bore; and a pair of friction pads, this pair being formed of an inboard pad (51) and an outboard pad (52) placed respectively, in the transverse direction (T), between the piston (311) and the inboard face (11) of the disc, and between the outboard face (12) of the disc and the jaw (32) of the caliper, the inboard pad (51) having an upstream end (511) and a downstream end (512) which are mounted so that they can slide in respective inboard housings (211, 221) of the upstream and downstream branches (21, 22), and the outboard pad (52) having an upstream end (521) and a downstream end (522) which are mounted so that they can slide in the respective outboard housings (212, 222) of the upstream and downstream branches (21, 22), the inboard and outboard pads (51, 52) carrying, between their respective ends, respective friction linings (510, 520) facing towards the inboard and outboard faces (11, 12) of the disc and via which each pad is urged by the disc in the direct sense of rotation (D) in the event of braking while the vehicle is travelling forward, **characterized in that** the pin (41) is a single pin and lies on a mid-plane (M) of the caliper, **in that** the downstream branch (22) of the carrier and the jaw (32) of the caliper have first and second respective contact surfaces (61a, 62a; 61b, 62b) capable of coming to bear one on the other in a first oblique plane (P1a, P1b), **in that** the downstream branch (22) of the carrier and at least one of the inboard (51) and outboard (52) pads have third and fourth respective contact surfaces (63a, 64a; 63b, 64b) capable of coming to bear one on the other in a second oblique plane (P2a, P2b), and **in that** the first and second oblique planes (P1a, P2a; P1b, P2b) form a non-zero angle (Aa, Ab) between them.

2. Disc brake according to Claim 1, **characterized in that** it comprises a spring (7) bearing on the outboard pad (52) and on the jaw (32) of the caliper and exerting an elastic torque tending to make the caliper (3) turn in the direct sense of rotation (D) relative to the outboard pad (52).

3. Disc brake according to Claim 1 or 2, **characterized in that** the upstream end (511, 521) of at least one of the inboard (51) and outboard (52) pads is attached to the upstream branch (21) of the carrier.

4. Disc brake according to any one of the preceding claims, **characterized in that** the downstream branch (22) of the carrier has a pair (61a, 61b) of first contact surfaces forming a dihedron (P1a, P1b) of mutual contact between the downstream branch and the jaw (32), and a pair (63a, 63b) of third contact surfaces forming a dihedron (P2a, P2b) of mutual contact between the downstream branch and the first pad (51, 52).

5. Disc brake according to Claim 4, **characterized in that** the jaw (32) of the caliper has, facing the downstream branch (22) of the carrier, a pair (62a, 62b) of second contact surfaces, each of which is capable of coming to bear on the dihedron (P1a, P1b) of mutual contact between the downstream branch (22) of the carrier and the jaw (32).

6. Disc brake according to either one of Claims 4 and 5, **characterized in that** the downstream end (512, 522) of the first pad (51, 52) has a pair (64a, 64b) of fourth contact surfaces, each of which is capable of coming to bear on the dihedron (P2a, P2b) of mutual contact between the downstream branch (22) of the carrier and the said first pad (51, 52).

7. Disc brake according to any one of the preceding claims, **characterized in that** the angle (Aa, Ab) formed between the first and second oblique planes (P1a, P2a; P1b, P2b) is at least equal to 45 degrees.
